(19) **Europäisches Patentamt**
**European Patent Office**
**Office européen des brevets**

(11) **EP 2 928 635 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **13799071.9**

(22) Anmeldetag: **03.12.2013**

(51) Int Cl.:
**B23K 26/06** (2014.01)   **B23K 26/08** (2014.01)
**B23K 26/36** (2014.01)   **B23K 31/02** (2006.01)

(86) Internationale Anmeldenummer:
**PCT/EP2013/075414**

(87) Internationale Veröffentlichungsnummer:
**WO 2014/086794 (12.06.2014 Gazette 2014/24)**

(54) **LASERBEARBEITUNGSVORRICHTUNG UND VERFAHREN ZUR BEARBEITUNG EINES WERKSTÜCKS UNTER VERWENDUNG EINER LASERBEARBEITUNGSVORRICHTUNG**

LASER MACHINING DEVICE AND METHOD FOR MACHINING A WORKPIECE BY USING A LASER MACHINING DEVICE

DISPOSITIF D'USINAGE AU LASER ET PROCÉDÉ D'USINAGE D'UNE PIÈCE AU MOYEN D'UN DISPOSITIF D'USINAGE AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2012 DE 102012111771**

(43) Veröffentlichungstag der Anmeldung:
**14.10.2015 Patentblatt 2015/42**

(73) Patentinhaber: **Ewag AG**
**4554 Etziken (CH)**

(72) Erfinder:
• **PLÜSS, Christoph**
**CH-3400 Burgdorf (CH)**

• **DOLD, Claus**
**CH-8006 Zürich (CH)**
• **EBERLE, Gregory**
**CH-8953 Dietikon (CH)**

(74) Vertreter: **Rüger, Barthelt & Abel**
**Patentanwälte**
**Webergasse 3**
**73728 Esslingen (DE)**

(56) Entgegenhaltungen:
WO-A1-2013/096372   DE-A1-102009 044 316
KR-A- 20100 095 735   US-A1- 2003 103 107
US-A1- 2012 080 414

**Beschreibung**

Die Erfindung betrifft ein Verfahren sowie eine Laserbearbeitungsvorrichtung zur Bearbeitung eines Werkstücks unter Verwendung einer Laserbearbeitungsvorrichtung zur Bearbeitung des Werkstücks mittels eines Laserstrahls gemäß dem Oberbegriff der Ansprüche 1 und 14 (siehe, z. B., US2012/0080414 A1).

Das erfindungsgemäße Verfahren bzw. die erfindungsgemäße Laserbearbeitungsvorrichtung dienen dazu, an einem Werkstück Material abzutragen, ein Schneidwerkzeug herzustellen.

Ein solches Verfahren und eine Laserbearbeitungsvorrichtung sind beispielsweise aus DE 10 2009 044 316 A1 bekannt. Die Laserstrahlimpulse werden innerhalb einer Puls- oder Schraffurfläche auf der Werkstückoberfläche gerichtet und treffen dort auf dem Werkstück auf. An der Auftreffstelle des Laserstrahlimpulses wird Material vom Werkstück abgetragen. Durch eine Relativbewegung zwischen dem Werkstück und der Schraffurfläche wird dann der Materialabtrag entsprechend dieser Bewegung am Werkstück durchgeführt. Die Schraffurfläche bewegt sich dabei ähnlich wie ein Fräswerkzeug oder ein anderes spanendes Werkzeug relativ zum Werkstück.

Dieses Verfahren hat sich als sehr erfolgreich bewiesen. Der vorliegenden Erfindung liegt die Aufgabe zugrunde, das bekannte Verfahren bzw. die bekannte Vorrichtung zu verbessern, um die Qualität des bearbeiteten Werkstücks beziehungsweise des hergestellten Produkts, beispielsweise eines Schneidwerkzeugs, zu verbessern.

Diese Aufgabe wird nach einem Verfahren mit den Merkmalen des Patentanspruches 1 und durch eine Laserbearbeitungsvorrichtung mit den Merkmalen des Patentanspruches 14 gelöst.

Erfindungsgemäß wird mittels eines Lasers ein Laserstrahl erzeugt. Es handelt sich vorzugsweise um einen gepulsten Laser, so dass der Laserstrahl durch Laserstrahlimpulse gebildet ist. Im Lichtweg des Laserstrahls befindet sich eine von einer Steuereinheit ansteuerbare Ablenkeinrichtung. Das vom Laser abgestrahlte in die Ablenkeinrichtung einfallende Laserlicht wird während der Werkstückbearbeitung in wenigstens zwei Raumrichtungen abgelenkt und innerhalb einer Schraffurfläche mit vorgegebener Kontur auf die Werkstückoberfläche gerichtet. Innerhalb der Schraffurfläche wird durch die Ablenkeinrichtung die Auftreffstelle des abgelenkten Laserstrahls entlang wenigstens einer vorgegebenen Spiralbahn bewegt. Der Radius der Spiralbahn vom Mittelpunkt bis zu einem äußeren Bahnendpunkt entspricht etwa dem Radius der Schraffurfläche. Diese Schraffurfläche und das Werkstück werden während der Bearbeitung mit Hilfe einer Positionieranordnung relativ zueinander positioniert und ausgerichtet und insbesondere auch relativ zueinander bewegt. Vorzugsweise weist die Positionieranordnung mehrere Maschinenachsen in Form von Drehachsen und/oder Linearachsen zur Bewegung und/oder Positionierung des Werkstücks und der Ablenkeinrichtung relativ zueinander auf.

Abhängig von der Bearbeitungsaufgabe und/oder dem Material des Werkstücks und/oder der eingestellten Laserleistung und/oder der Impulsdauer bzw. Impulsfrequenz des Lasers und/oder weiteren die Bearbeitung beeinflussenden Randbedingungen wird erfindungsgemäß der Energieeintrag des Lasers innerhalb der Schraffurfläche durch Auswählen oder Einstellen wenigstens eines Spiralbahnparameters, der den Verlauf der Spiralbahn vom Mittelpunkt zum äußeren Bahnendpunkt beschreibt, eingestellt. Als Spiralbahnparameter kann zumindest der Linienabstand der Spiralbahn dienen. Unter dem Linienabstand der Spiralbahn ist der Abstand zwischen zwei unmittelbar benachbarten Schnittpunkten der Spiralbahn mit einer durch den Mittelpunkt der Spiralbahn verlaufenden Geraden oder Achse zu verstehen. Mit anderen Worten ist der Abstand der einzelnen Spiralumläufe der Spiralbahn ausgehend vom Mittelpunkt der Spiralbahn in einer Radialrichtung betrachtet der Linienabstand. Der Linienabstand ist vorzugsweise ungleichmäßig und kann beispielsweise ausgehend vom Mittelpunkt der Spiralbahn nach radial außen kontinuierlich zunehmend oder kontinuierlich abnehmend eingestellt werden.

Entsprechend dem Linienabstand ist die Verteilung des Energieeintrag des Laserstrahls innerhalb der Schraffurfläche vorgegeben. Der Energieeintrag ist beispielsweise im Randbereich der Schraffurfläche und/oder im Zentrum der Schraffurfläche größer als an anderen Stellen der Schraffurfläche. Über den Linienabstand kann somit ein geeignetes Abtragsprofil für den Materialabtrag eingestellt werden, das bei der Relativbewegung zwischen der Schraffurfläche und dem Werkstück erzeugt wird. Dadurch kann über den Linienabstand das Abtragsprofil für die aktuelle Bearbeitungsaufgabe eingestellt und darauf abgestimmt werden.

Während der Bearbeitung des Werkstücks wird die Schraffurfläche entlang der Werkstückoberfläche bewegt und dabei ein Materialabtrag erzeugt, der gemäß der Erfindung die Form einer Nut hat, wenn die Schraffurfläche vollständig innerhalb einer Werkstückoberfläche auf das Werkstück auftrifft und nicht lediglich teilweise mit der Werkstückoberfläche überlappt. Dabei entsteht ein Abtragsprofil, das sozusagen dem Querschnittsprofil der hergestellten Nut entspricht. Über den Linienabstand und gegebenenfalls weitere Spiralbahnparameter kann das Abtragsprofil beeinflusst und an die Bearbeitungsaufgabe angepasst werden. Bei radial vom Mittelpunkt der Spiralbahn nach außen gesehen abnehmenden Linienabstand lassen sich steilere Nutflanken bzw. Flanken des Abtragsprofils erzeugen. Dies ist beispielsweise beim Schlichten zur Erzielung einer geringen Oberflächenrauheit an der Flanke des Abtragsprofils vorteilhaft. Beim Schlichten des Werkstücks wird lediglich eine geringe Materialabtragsrate benötigt, so dass die in Zentrum der Schraffurfläche eingebrachte Energie zur Laserablation gegenüber einem höheren Energieeintrag im Randbereich der Schraffurfläche verringert werden kann. Durch eine solche Einstellung lassen sich auch kleine Schneidkantenradien erreichen.

Umgekehrt kann über eine Einstellung des Linienabstands die Flankensteilheit des Abtragsprofils verringert und dafür ein höherer Anteil der in die Schraffurfläche insgesamt eingebrachten Laserenergie im mittleren der Schraffurfläche dafür sorgen, dass am Nutgrund bzw. am Grund des Abtragprofils ein ausreichend hoher und möglichst gleichmäßiger Materialabtrag erreicht wird. Eine solche Einstellung ist geeignet, um hohe Materialabtragsraten sozusagen bei der Schruppbearbeitung des Werkstücks zu erreichen.

Es hat sich gezeigt, dass die Bewegung der Auftreffstelle des Lasers innerhalb der Schraffurfläche entlang einer Spiralbahn gegenüber anderen Bahnverläufen enorme Vorteile aufweist. Der Energieeintrag muss bei der Erzielung einer hohen Bearbeitungsgenauigkeit sehr genau eingestellt werden können. Es sollen auch ausreichend große Materialabtragsraten erreicht werden. Über das Erzeugen einer Schraffurfläche mit einer innerhalb der Schraffurfläche entlang der Spiralbahn bewegten Laserauftreffstelle des Laserstrahls auf das Werkstück lassen sich sehr hohe Materialabtragsraten erzielen. Die von der Ablenkeinrichtung erzeugte Bewegung der Auftreffstelle des Laserstrahls innerhalb der Schraffurfläche kann beispielsweise 2000 Millimeter pro Sekunde betragen und ist insbesondere um etwa 1 bis 2 Größenordnungen schneller als die Relativbewegung des Werkstücks gegenüber der Ablenkeinrichtung beziehungsweise der Schraffurfläche, die etwa 20-120 Millimeter pro Minute betragen kann. Durch die Einstellung des Linienabstandes der Spiralbahn kann eine sehr genaue und differenzierte Einstellung der Energieverteilung der durch den Laserstrahl in die Schraffurfläche eingetragenen Energie und mithin des Materialabtrags innerhalb der Schraffurfläche erreicht werden. Die schnelle Bewegung des Laserstrahls mittels der Ablenkeinrichtung entlang einer gekrümmten Bahn lässt sich unter Vermeidung einer zu hohen Belastung der Stellmittel, insbesondere der Stellmotoren der Ablenkeinrichtung, auch bei langen Betriebssdauern der Laserbearbeitungsvorrichtung aufrecht erhalten.

Es ist vorteilhaft, wenn als ein die wenigstens eine Spiralbahn beschreibender Spiralparameter zusätzlich zum Linienabstand einer oder mehrere der folgenden Spiralbahnparameter zur Beeinflussung des Materialabtrags eingestellt oder aus vorgegebenen Daten ausgewählt werden:

- Der Radius der wenigstens einen Spiralbahn zwischen dem Mittelpunkt der Spiralbahn und einem äußeren Bahnendpunkt;
- Die Anzahl der Spiralumläufe der wenigstens einen Spiralbahn innerhalb der Schraffurfläche.

Der Radius der wenigstens einen Spiralbahn entspricht etwa dem Radius der kreisförmigen Schraffurfläche und bestimmt die Breite des entstehenden Abtragsprofils. Durch die Anzahl der Spiralumläufe lässt sich der Gesamtenergieeintrag in die Schraffurfläche vorgeben. Über den Linienabstand kann dann der Gesamtenergieeintrag innerhalb der Schraffurfläche verändert bzw. an die Bearbeitungsaufgabe angepasst werden.

Der Linienabstand wird gemäß der Erfindung durch eine vorgegebene Abstandsfunktion beeinflusst. Die Abstandsfunktion enthält wenigstens einen veränderbaren Abstandsparameter. Dieser Abstandsparameter kann eingestellt bzw. aus vorgegebenen Werten ausgewählt werden. Vorzugsweise weist die Abstandsfunktion einen Term auf, bei dem der Abstandsparameter im Exponenten der Funktionsvariablen steht. Die Funktionsvariable gibt dabei den aktuellen Abstand an der betrachteten Stelle der Spiralbahn vom Mittelpunkt der Spiralbahn an.

Es ist vorteilhaft, wenn innerhalb der Schraffurfläche zumindest eine erste Spiralbahn und zumindest eine weitere, sich von der ersten Spiralbahn unterscheidende zweite Spiralbahn vorgegeben ist. Die Auftreffstelle des Lasers wird dann nacheinander durch die mehreren Spiralbahnen innerhalb der Schraffurfläche gelenkt. Die erste Spiralbahn verläuft vom Mittelpunkt der Spiralbahn bzw. der Schraffurfläche nach radial außen bis zu einem Bahnendpunkt der ersten Spiralbahn. An diesem Bahnendpunkt der ersten Spiralbahn schließt die zugeordnete zweite Spiralbahn unmittelbar an und verläuft von dort zum gemeinsamen Mittelpunkt der beiden Spiralbahnen zurück. Auf diese Weise kann die Auftreffstelle des Laserstrahls ohne Richtungsumkehr und ohne Ecken und Knicke in der Bewegungsbahn vom Mittelpunkt nach außen und wieder zurück erfolgen. Dadurch lässt sich ein besonders schonender Betrieb für die Stellmittel beziehungsweise Stellmotoren der Ablenkeinrichtung erreichen. Ruckartige Bewegungen mit hohen Beschleunigungen bzw. Beschleunigungsänderungen in den Stellmotoren der Ablenkeinrichtung lassen sich hierdurch besonders gut vermeiden.

Die zweite Spiralbahn kann dieselben Spiralbahnparameter aufweisen wie die erste Spiralbahn. Beispielsweise kann die zweite Spiralbahn durch eine Spiegelung der ersten Spiralbahn erreicht werden. Die Achse, an der die erste Spiralbahn zur Erzeugung der zweiten Spiralbahn gespiegelt wird, verläuft durch den Mittelpunkt der ersten Spiralbahn sowie den Bahnendpunkt der ersten Spiralbahn. Jeweils eine erste und eine zweite Spiralbahn bilden ein Spiralbahnpaar.

Zusätzlich können weitere Spiralbahnpaare, von jeweils einer ersten und einer zugeordneten zweiten Spiralbahn durch Rotation eines Ausgangspaares einer ersten und einer zweiten Spiralbahn erreicht werden. Die mehreren Spiralbahnpaare aus jeweils einer ersten und einer zweiten Spiralbahn sind insbesondere in Umfangsrichtung um den Mittelpunkt der Schraffurfläche gleichmäßig innerhalb der Schraffurfläche verteilt. Durch eine solche Vorgabe für die Ablenkung des Laserstrahls kann nicht nur ein schonender Dauerbetrieb der Laserbearbeitungsvorrichtung, sondern gleichzeitig ein sehr homogener Materialabtrag innerhalb der Schraffurfläche und insbesondere auch im Bereich des Mittelpunktes der Schraffurfläche erreicht werden. Das Abtragsprofil kann dadurch eine annähernd ideale U-Form mit steilen Flanken und einem ausreichend großen Materialabtrag im Bereich des Grundes aufweisen.

Bei einer bevorzugten Ausführungsform ist die wenigstens eine Spiralbahn aus mehreren Halbkreissegmenten mit unterschiedlichen Radien zusammengesetzt. Vorzugsweise befinden sich die Übergangspunkte zwischen den jeweils aneinander anschließenden Halbkreissegmenten auf einer gemeinsamen Achse durch den Mittelpunkt und dem Bahnendpunkt der Spiralbahn. Jeweils zwei Halbkreissegmente stellen einen Spiralumlauf dar. Eine besonders einfache Berechnung der Spiralbahn kann dadurch erreicht werden, dass die Halbkreissegmente, die auf einer gemeinsamen Seite der Achse durch die Übergangspunkte angeordnet sind, eine Gruppe von ersten Halbkreissegmenten bildet, die jeweils konzentrisch zum Mittelpunkt der Spiralbahn angeordnet sind. Lediglich die jeweils andere Gruppe von zweiten Halbkreissegmenten weist jeweils einen Halbkreismittelpunkt auf, der gegenüber dem Mittelpunkt der Spiralbahn verschoben ist.

Alternativ zu diesem Ausführungsbeispiel kann die Spiralbahn auch durch andere mathematische Verfahren berechnet beziehungsweise gebildet sein, beispielsweise mithilfe einer Spline-Interpolation.

Für die Werkstückbearbeitung können mehrere auswählbare Bearbeitungsprogramme in der Laserbearbeitungsvorrichtung abgespeichert sein. Eine Bedienperson kann abhängig von der Bearbeitungsaufgabe ein geeignetes Bearbeitungsprogramm auswählen. Beispielsweise können dort Werkstückmaterialien, gewünschte Formen des Abtragsprofils, Schneidkantenradien, Oberflächenrauheiten oder dergleichen eingestellt bzw. ausgewählt werden. Der Linienabstand und gegebenenfalls weiterer Spiralbahnparameter werden dann abhängig vom ausgewählten Bearbeitungsprogramm eingestellt. Diese Spiralbahnparameter sind dem auswählbaren Bearbeitungsprogramm zugeordnet, beispielsweise in einer Tabelle oder einer anderen vergleichbaren Zuordnungsvorschrift. Die für eine Bearbeitungsaufgabe vorgesehenen Bearbeitungsprogramme und die dafür notwendigen Spiralbahnparameter können empirisch ermittelt und dann abgespeichert werden.

Vorteilhafte Ausgestaltungen der Erfindung ergeben sich aus den abhängigen Patentansprüchen sowie der Beschreibung. Die Beschreibung beschränkt sich auf wesentliche Merkmale des erfindungsgemäßen Verfahrens bzw. der Laserbearbeitungsvorrichtung. Die Zeichnung ist ergänzend heranzuziehen. Nachfolgend werden Ausführungsbeispiele der Erfindung anhand der Zeichnung im Einzelnen erläutert. Es zeigen:

Figur 1 ein schematisches Blockschaltbild eines Ausführungsbeispiels einer Laserbearbeitungsvorrichtung,

Figur 2 eine schematische perspektivische Darstellung der Bearbeitung des Werkstücks und der hierfür entlang des Werkstücks bewegten Schraffurfläche,

Figur 3 ein Ausführungsbeispiel einer Spiralbahn und die Ermittlung des Linienabstands der Spiralbahn mit Hilfe einer Abstandsfunktion in schematischer Darstellung,

Figur 4 ein weiteres Ausführungsbeispiel einer Spiralbahn und das durch diese Spiralbahn erzeugte Abtragsprofil,

Figuren 5 bis 7 jeweils eine schematische Prinzipdarstellung eines durch Variation des Linienabstands der Spiralbahn und gegebenenfalls weiterer Spiralbahnparameter erzeugbares Abtragsprofil,

Figur 8 ein weiteres Ausführungsbeispiel einer ersten Spiralbahn,

Figur 9 die erste Spiralbahn gemäß Figur 8 sowie eine anhand der ersten Spiralbahn ermittelte zusätzliche zweite Spiralbahn innerhalb der Schraffurfläche,

Figur 10 vier Paare jeweils einer ersten und einer zweiten Spiralbahn gemäß Figur 9,

Figur 11 eine Prinzipdarstellung für die Ansteuerung von Stellmotoren einer Ablenkeinrichtung bei einem mäanderförmigen Bahnverlauf für die Auftreffstelle des Laserstrahls innerhalb einer Schraffurfläche und

Figur 12 eine schematische Darstellung der Ansteuerung der Stellmotoren der Ablenkeinrichtung bei der Führung der Auftreffstelle des Laserstrahls auf die Werkstückoberfläche entlang einer Spiralbahn innerhalb der Schraffurfläche.

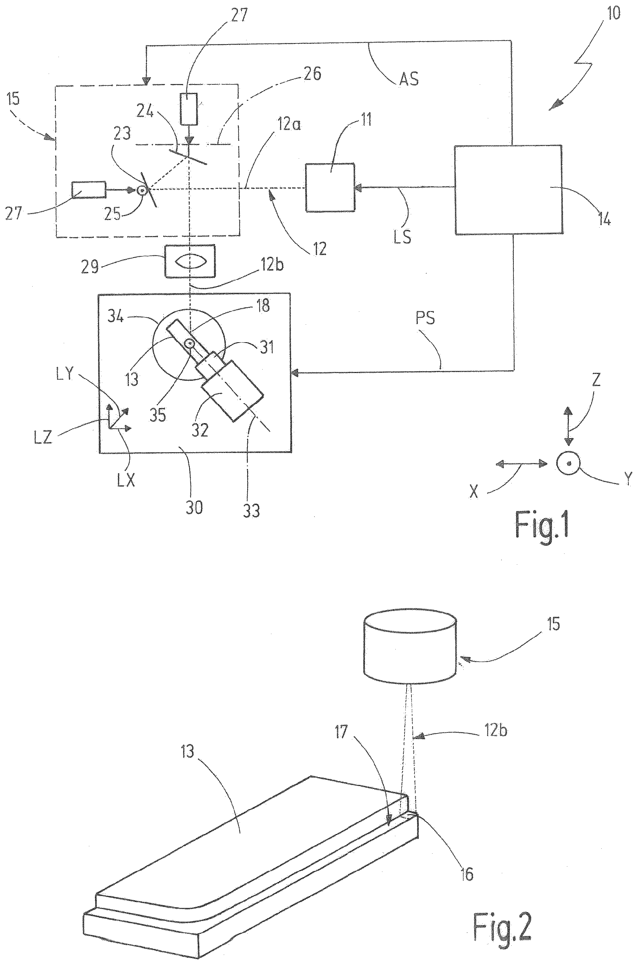

In Figur 1 ist ein Blockschaltbild einer Laserbearbeitungsvorrichtung 10 veranschaulicht. Die Laserbearbeitungsvorrichtung 10 weist einen Laser 11 zur Erzeugung eines Laserstrahls 12 auf. Bei dem Laserstrahl 12 kann es sich um einen impulsförmigen Laserstrahl 12 handeln. Heute sind bereits Pulsfrequenzen von bis zu 30 MHz erreichbar - die Pulsfrequenz kann aber abhängig von weiteren Entwicklungen zukünftig auch höher liegen. Mittels des Laserstrahls 12 wird ein Werkstück 13 bearbeitet, in dem die auftreffenden Laserstrahlimpulse Material abtragen. Das Material des Werkstücks wird an der Auftreffstelle 18 des Laserstrahlimpulses verdampft (Laserablation).

Eine Steuereinheit 14 steuert den Laser 11 mit Hilfe eines Lasersignals LS. Über das Lasersignal LS können die Betriebsparameter des Lasers 11, beispielsweise die Impulsdauer, die Impulsfrequenz, die Laserleistung oder dergleichen vorgegeben werden.

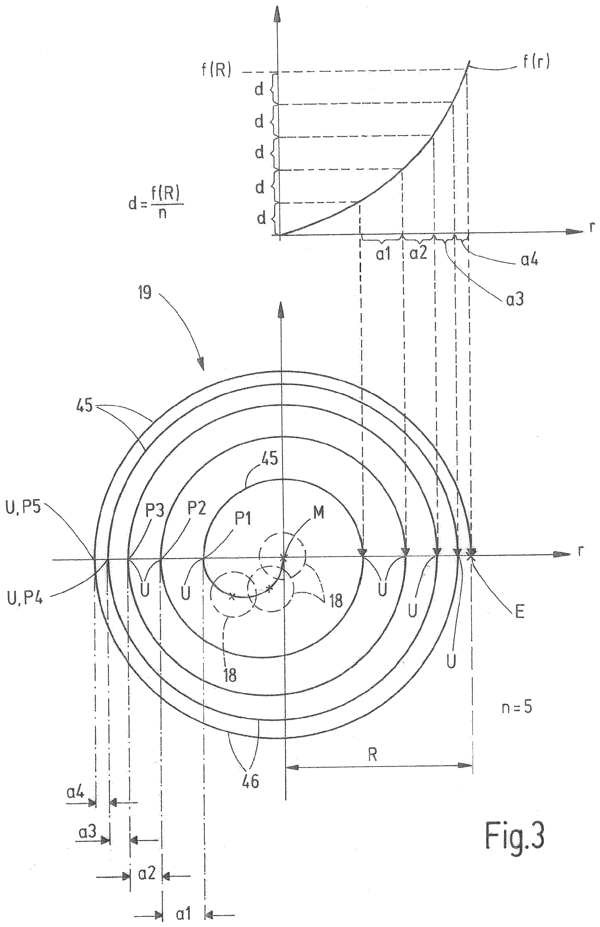

Die Laserbearbeitungsvorrichtung 10 weist im Lichtweg des Laserstrahls 12 eine durch die Steuereinheit 14 ansteuerbare Ablenkeinrichtung 15 auf. Die Ablenkeinrichtung 15 dient dazu, den vom Laser 11 abgestrahlten einfallenden Laserstrahl 12a entsprechend der Ansteuerung durch die Steuereinheit 14 abzulenken, so dass der aus der Ablenkeinrichtung 15 abgegebene, abgelenkte Laserstrahl 12b innerhalb einer Schraffurfläche 16 (Figur 2) auf die Werkstückoberfläche 17 des Werkstücks 13 auftrifft. Der abgelenkte Laserstrahl 12b wird dabei auf eine Auftreffstelle 18 innerhalb der Schraffurfläche 16 gerichtet. In Figur 3 sind schematisch nur drei Auftreffstellen 18 veranschaulicht. An jeder Auftreffstelle 18 wird ein Krater im Werkstück 13 erzeugt. Benachbarte Krater bzw. Auftreffstellen 18 können überlappend angeordnet werden, wobei der Überlappungsanteil der benachbarten Auftreffstellen 18 anders als in Figur 3 gezeigt auch größer sein kann und bis annähernd 100% betragen kann.

Die Ablenkeinrichtung 15 wird derart gesteuert, dass sich die Auftreffstelle 18 innerhalb der Schraffurfläche 16 entlang einer vorgegebenen Spiralbahn 19 bewegt (Figur 3). Die Auftreffstellen 18 der erzeugten Laserstrahlimpulse wandern somit innerhalb der Schraffurfläche 16 entlang wenigstens einer Spiralbahn 19. Dabei wird innerhalb der Schraffurfläche 16 Material vom Werkstück 13 entfernt.

Zur Ablenkung bzw. Ausrichtung des abgelenkten Laserstrahls 12b entlang der Spiralbahn 19 innerhalb der Schraffurfläche 16 weist die Ablenkeinrichtung 15 wenigstens einen und bei dem hier beschriebenen Ausführungsbeispiel einen ersten Ablenkspiegel 23 und einen zweiten Ablenkspiegel 24 auf. Der einfallende Laserstrahl 12a trifft zunächst auf den ersten Ablenkspiegel 23 auf, wird von dort auf den zweiten Ablenkspiegel 24 reflektiert und vom zweiten Ablenkspiegel 24 wiederum auf die gewünschte Auftreffstelle 18 gerichtet. Über die Ablenkeinrichtung 15 wird der Laserstrahl 12 somit in zumindest zwei Raumrichtungen ausgerichtet, so dass die Auftreffstelle 18 innerhalb der Schraffurfläche 16 jeden beliebigen Punkt erreichen kann. Beim Ausführungsbeispiel sind die beiden Ablenkspiegel 23, 24 zu diesem Zweck um jeweils eine zugeordnete Spiegelschwenkachse 25, 26 schwenkbar gelagert. Die erste Spiegelschwenkachse 25 des ersten Ablenkspiegels 23 verläuft bei dem hier beschriebenen Ausführungsbeispiel rechtwinklig zur Zeichenebene in Figur 1 und beispielsgemäß in einer Y-Richtung. Die zweite Spiegelschwenkachse 26 des zweiten Ablenkspiegels 24 ist rechtwinklig zur ersten Spiegelschwenkachse 25 ausgerichtet und verläuft beispielsgemäß in einer X-Richtung.

Jedem der beiden Ablenkspiegel 23, 24 ist jeweils ein Stellantrieb bzw. Stellmotor 27 zugeordnet, mittels dem eine jeweilige Schwenkbewegung um die zugeordnete Spiegelschwenkachse 25 bzw. 26 erzeugt werden kann. Die Stellmotoren 27 werden elektrisch angesteuert auf Basis eines Ablenksignals AS der Steuereinheit 14.

Der von der Ablenkeinrichtung 15 abgelenkte Laserstrahl 12b wird beim Ausführungsbeispiel durch eine Fokussiereinheit 29 geführt, die eine oder mehrere optische Fokussierelemente, beispielsweise Linsen, aufweisen kann. Über die Fokussiereinheit 29 wird der Laserstrahl auf die Auftreffstelle 18 fokussiert.

Die Laserbearbeitungsvorrichtung 10 weist außerdem eine Positioniereinrichtung 30 auf. Die Positionieranordnung 30 dient dazu, einen Werkstückhalter 31 der Laserbearbeitungsvorrichtung 10, der das Werkstück 13 während der Bearbeitung hält, relativ zur Ablenkeinrichtung 15 während der Bearbeitung zu bewegen. Hierfür wird die Positionieranordnung 30 durch die Steuereinheit 14 mit einem Positioniersignal PS angesteuert.

Die Positionieranordnung 30 kann mehrere Maschinenachsen mit Linearantrieben und/oder Schwenkantrieben aufweisen. Die Linearantriebe LX, LY, LZ sind in Figur 1 lediglich stark schematisiert durch Pfeile veranschaulicht. Die Anzahl und die Kombination der davon verwendeten Linearantriebe ist variabel. Bei dem hier beschriebenen Ausführungsbeispiel sind fünf Maschinenachsen vorhanden, wobei drei lineare Achsen mit jeweils einem Linearantrieb LX, LY, LZ und zwei Schwenkachsen mit jeweils einem Schwenkantrieb vorgesehen sind. Über die Linearantriebe kann der Werkstückhalter 31 in alle drei Raumrichtungen X, Y, Z bewegt werden. Ein erster Schwenkantrieb 32 dient zum Schwenken bzw. Drehen des Werkstücks 13 um eine erste Schwenkachse 33, die durch den Werkstückhalter 31 verläuft. Über einen zweiten Schwenkantrieb 34 wird der erste Schwenkantrieb 32 mit der ersten Schwenkachse 33 um eine zweite Schwenkachse 35 geschwenkt, die beim Ausführungsbeispiel in X-Richtung rechtwinklig zur Zeichenebene in Figur 1 verläuft. Die Anzahl und Kombination der Maschinenachsen ist beim Ausführungsbeispiel gemäß Figur 1 lediglich beispielhaft und kann beliebig variiert werden.

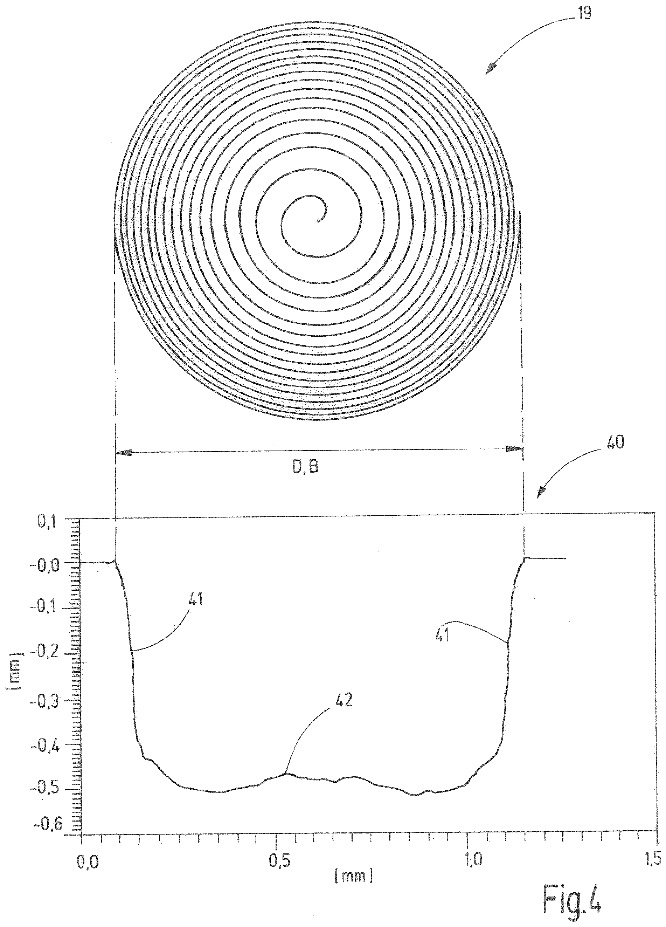

In Figur 2 ist stark schematisiert ein quaderförmiges Werkstück 13 während der Bearbeitung veranschaulicht. Über die Positionieranordnung 30 wird während der Bearbeitung eine Relativbewegung zwischen der Ablenkeinrichtung 15 und dem Werkstück 13 erzeugt, in dem beispielsgemäß das Werkstück 13 mittels der Positionieranordnung 30 relativ zur Ablenkeinrichtung 15 bewegt wird. Dabei wandert die Schraffurfläche 16 entlang der Werksrückoberfläche 17 und erzeugt an ihrer jeweiligen Position einen Materialabtrag am Werkstück 13. Liegt die Schraffurfläche 16 vollständig innerhalb der Werkstückoberfläche 17 des Werkstücks 13, so wird ein nutförmiger Materialabtrag erreicht, so dass das entstehende Abtragsprofil 40 zwei Flanken 41 und einen Grund 42 aufweist (Figuren 4 bis 7). Es ist jedoch auch möglich, die Position der Schraffurfläche 16 - wie in Figur 2 dargestellt - entlang einer Kante des Werkstücks 13 zu führen, so dass das Abtragsprofil lediglich eine Flanke 41 und den Grund 42 aufweist. Dies ist dann der Fall, wenn der Rand der Schraffurfläche 16 an einer Kante des Werkstücks endet oder die Schraffurfläche 16 nur teilweise mit der Werkstückoberfläche 17 überlappt.

Erfindungsgemäß wird über wenigstens einen Spiralbahnparameter, der den Verlauf bzw. die Form der wenigstens einen Spiralbahn 19 innerhalb der Schraffurfläche 16 beschreibt, der über den Laser in die Schraffurfläche 16 eingebrachte Energieeintrag sowie die Verteilung dieses Energieeintrags innerhalb der Schraffurfläche 16 beeinflusst. Dadurch können gewünschte Abtragsprofile 40 erzeugt werden, die wiederum die Eigenschaften des bearbeiteten Werkstücks 13 bzw. des daraus hergestellten Produkts, beispielsweise eines Schneidwerkzeugs, beeinflussen. Als Spiralbahnparameter können folgende Parameter alleine oder in beliebiger Kombination verwendet werden:

- der Radius R von einem Mittelpunkt M der Spiralbahn 19 bis zu einem radial äußeren Bahnendpunkt E beziehungsweise der Durchmesser der Spiralbahn 19 bzw. der Schraffurfläche 16;
- die Anzahl der Spiralumläufe n ausgehend vom Mittelpunkt M der Spiralbahn 19 bis zu dem Bahnendpunkt E;
- der variable Linienabstand a zwischen zwei benachbarten Schnittpunkten P der Spiralbahn 19 mit einer durch den Mittelpunkt M sowie den Bahnendpunkt E verlaufenden Geraden oder Achse, bei der Darstellung in Figur 3 die r-Achse.

Über den Radius R oder den Durchmesser der Spiralbahn 19 wird die maximale Breite B des Abtragsprofils vorgegeben, wie dies in Figur 4 schematisch veranschaulicht ist. Über die Anzahl der Spiralumläufe n wird der Gesamtenergieeintrag der Energie des Laserstrahls 12 in die Schraffurfläche 16 bestimmt. Die Verteilung des Gesamtenergieeintrags innerhalb der Schraffurfläche 16 wird durch den Linienabstand a vorgegeben. Der Linienabstand a kann für die gesamte Spiralbahn 19 konstant sein. Zur Erzielung gewünschter Abtragsprofile 40 kann der Linienabstand a ausgehend vom Mittelpunkt M der Spiralbahn 19 nach radial außen veränderlich sein, beispielsweise kontinuierlich größer oder insbesondere auch kontinuierlich kleiner werden.

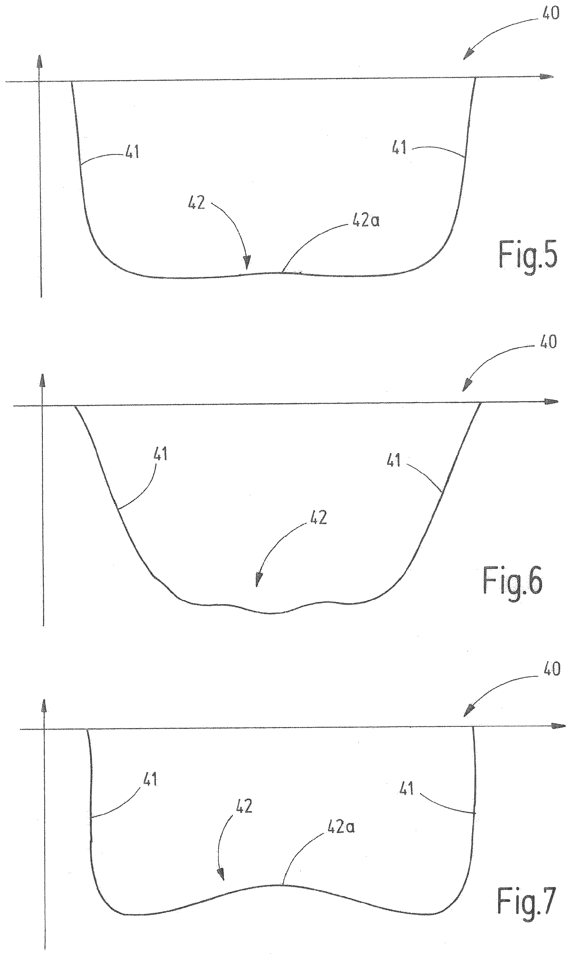

In den Figuren 5 bis 7 sind schematisch verschiedene Grundformen für erreichbare Abtragsprofile 40 veranschaulicht. Figur 5 zeigt ein Abtragsprofil 40 in U-Form mit relativ steilen Flanken 41 und einem Grund 42 entlang dem der Materialabtrag relativ gleichmäßig erfolgt. Im Bereich des Mittelpunkts M der Spiralbahn 19 bzw. der Schraffurfläche 16 kann sich am Grund 42 eine leichte Erhebung 42a ausbilden, wenn der Energieeintrag im Bereich des Mittelpunkts M der Spiralbahn 19 geringer ist als radial weiter außen. Das U-förmige Abtragsprofil 40 gemäß Figur 5 kann beispielsweise zur Erzielung eines hohen Materialabtrags in einem ersten Bearbeitungsschritt des Werkstücks 13 gewählt werden.

Figur 6 zeigt ein Abtragsprofil 40, bei dem die beiden Flanken 41 einen größeren Winkel zwischen einander einschließen als bei dem Abtragsprofil 40 gemäß Figur 5 - die Flankensteilheit der Flanken 41 ist hier demnach geringer. Das Abtragsprofil 40 nach Figur 6 kann daher als V-Profil bezeichnet werden.

In Figur 7 ist ein Abtragsprofil 40 mit zwei Flanken 41 gezeigt, die einen sehr kleinen Winkel miteinander einschließen und daher sehr steil sind. Der Linienabstand a ist zur Erzeugung dieses Abtragsprofils 40 im Randbereich der Schraffurfläche 16 und mithin radial außen an der Spiralbahn 19 gering, was dort zu einem hohen Energieeintrag führt. Aufgrund dieser Energieverteilung von Zentum der Schraffurfläche nach radial außen, ist der Materialabtrag im Bereich des Grundes 42 im Anschluss an die Flanken 41 größer als im mittleren Bereich des Grundes 42, so dass sich dort eine größere Erhebung 42a ausbildet als bei den anderen Ausführungsbeispielen gemäß der Figuren 5 und 6. Das Abtragsprofil kann als W-Profil bezeichnet werden. Wegen des relativ hohen Energieantrags im Randbereich der Schraffurfläche 16 eignet sich das W-Profil nach Figur 7 insbesondere zur Erzeugung sehr kleiner Schneidkantenradien und zur Schlichtbearbeitung des Werkstücks 13. An den Flanken 41 und mithin an einer Spanfläche oder Freifläche des Werkstücks 13 lassen sich Oberflächen mit einer sehr geringen Oberflächenrauheit erzeugen, die in etwa einer polierten Oberfläche entsprechen.

Die Ermittlung des Linienabstandes a ist stark schematisiert in Figur 3 dargestellt. Es sei beispielhaft angenommen, dass die Anzahl n der Spiralumläufe n = 5 gewählt wurde. Die Ermittlung des Linienabstands a erfolgt für andere Zahlenwerte n entsprechend. Wie geschildert wird über die Anzahl n der Spiralumläufe die Energie bestimmt, die in die Schraffurfläche 16 zur Erzielung des Materialabtrags eingetragen wird, wenn die Überlappung benachbarter Auftreffstellen 18 und die Laserleitung gegeben sind. Auch die Überlappung benachbarter Auftreffstellen 18 und die Laserleistung sowie die Pulsfrequenz verändern den Energieeintrag in die Schraffurfläche.

Ferner ist eine Abstandsfunktion f(r) vorgegeben. Die Abstandsfunktion f ist somit abhängig von der Funktionsvariablen r, die im vorliegenden Fall den Abstand der Schnittpunkte P vom Mittelpunkt M der Spiralbahn 19 angibt. Über die Abstandsfunktion f wird somit die Liniendichte der Spiralbahn 19 abhängig vom Abstand zum Mittelpunkt M beeinflusst. Beim vorliegenden Ausführungsbeispiel lautet die Abstandsfunktion f wie folgt:

$$f(r) = b * r^c$$

mit

r: Funktionsvariable, die den Abstand der betrachteten Stelle der Spiralbahn 19 vom Mittelpunkt M angibt,

b: Skalierungsfaktor,

c: Abstandsparameter.

Über den Abstandsparameter c wird der Linienabstand a eingestellt. Ist der Abstandparameter c größer als 0 und kleiner als 1 nimmt der Linienabstand vom Mittelpunkt M der Spirale nach radial außen zu. Ist der Abstandparameter c größer als 1 nimmt der Linienabstand vom Mittelpunkt M der Spirale nach radial außen ab, was beispielhaft in Figur 3 veranschaulicht ist. Ist der Abstandparameter c = 1 ist der Linienabstand a konstant. Der Skalierungsfaktor b ist in der Regel b = 1, um den Radius R der Schraffurfläche 16 nicht zu verändern.

Es können auch andere Abstandsfunktionen f gewählt werden, die beispielsweise eine logarithmische oder exponentielle Abhängigkeit des Funktionswertes f(r) von der Funktionsvariablen r angeben. Es ist auch möglich, für verschiedene Abschnitte der Funktionsvariablen r unterschiedliche Abstandsfunktionen vorzugeben, die vorzugsweise einen stetigen und/oder differenzierbaren Übergang an den jeweiligen Abschnittsgrenzen der Abschnitts der Funktionsvariablen r aufweisen. Es hat sich als vorteilhaft erwiesen, wenn die Abstandsfunktionen f einen Term aufweist, bei dem der Abstandsparameter c im Exponenten der Funktionsvariablen r steht.

Anhand der Abstandsfunktion f wird die Liniendichte a wie in Figur 3 veranschaulicht bestimmt. Zunächst wird der Funktionswert f(R) für den Radius R der Spiralbahn 19 berechnet und anschließend abhängig von der Anzahl n der Spiralumläufe in äquidistante Abschnitte d = f(R)/n unterteilt (Figur 3). Dann werden die einzelnen Linienabstände a1, a2, a3, ... a(n-1) anhand der Umkehrfunktion der Abstandsfunktion f bestimmt. Der Bahnendpunkt E ist wegen des bekannten Radius R der Spiralbahn 19 ebenfalls bekannt. Von diesem Bahnendpunkt aus können anhand der Linienabstände a1, a2, a3, ... a(n-1) die Positionen der Schnittpunkte P für jeden Spiralumlauf der Spiralbahn 19 mit der r-Achse berechnet werden.

Die Spiralbahn 19 ist beispielsgemäß durch erste Halbkreissegmente 45 und zweite Halbkreissegmente 46 gebildet. Alle Halbkreissegmente 45, 46 haben unterschiedliche Radien. An ein erstes Halbkreissegment 45 schließt jeweils ein bzw. schließen zwei zweite Halbkreissegmente 46 an einen jeweiligen Übergangspunkt U an. Die Übergangspunkte U liegen auf einer gemeinsamen Achse, beim Ausführungsbeispiel nach Figur 3 der r-Achse. Die Gruppe von ersten Halbkreissegmenten 45 ist konzentrisch zum Mittelpunkt M der Spiralbahn 19 angeordnet. Die Gruppe von zweiten Halbkreissegmenten 46 weisen jeweils einen vom Mittelpunkt M der Spiralbahn 19 verschiedenen Halbkreismittelpunkt auf, wobei auch die einzelnen zweiten Halbkreissegmente 46 jeweils verschiedene Halbkreismittelpunkte aufweisen. Durch diesen Aufbau lässt sich die Spiralbahn 19 sehr einfach und schnell berechnen.

Ausgehend von dem wie oben beschrieben ermittelten äußeren Schnittpunkt P (hier: Schnittpunkt P5) bzw. dem Bahnendpunkt E wird mit dem bekannten Radius R das äußerste, erste Halbkreissegment 45 konzentrisch zum Mittelpunkt M positioniert. Das sich daran anschließende zweite Halbkreissegment 46 hat den Linienabstand a(n-1) - hier a4 - vom Bahnendpunkt E. Daraus lässt sich der Halbkreismittelpunkt dieses zweiten Halbkreissegments 46 ermitteln, wodurch sich der äußerste Spiralbahnumlauf der Spiralbahn 19 ergibt. Die anschließenden weiteren Spiralbahnumläufe werden analog hierzu bestimmt, bis schließlich die Spiralbahn 19 ihren Mittelpunkt M erreicht.

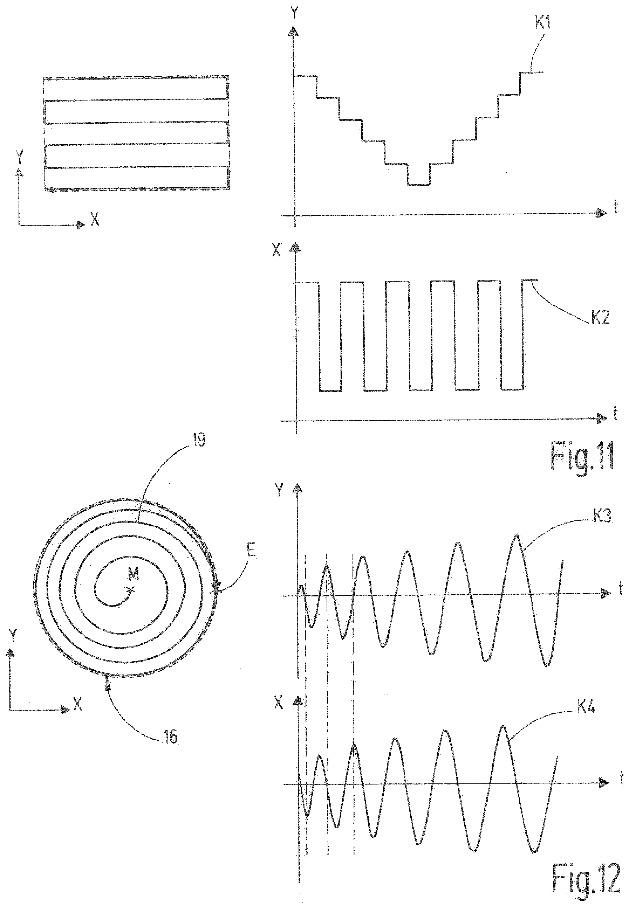

Die Führung der Auftreffstelle 18 und mithin des abgelenkten Laserstrahls 12b entlang der Spiralbahn 19 innerhalb der Schraffurfläche 16 hat gegenüber anderen Bahnverläufen Vorteile für den Betrieb der Ablenkeinrichtung 15 mit den Stellmotoren 27 für die Ablenkspiegel 23, 24. In Figur 11 ist schematisch eine mäanderförmige Bahn als Beispiel für die Führung der Auftreffstelle 18 des Laserstrahls 12 auf der Werkstückoberfläche 17 angenommen. Bei solchen oder vergleichbaren Bewegungsbahnen der Auftreffstelle 18 des abgelenkten Laserstrahls 12b, werden die Ablenkspiegel wie in Figur 11 dargestellt beschleunigt und immer wieder angehalten, um das gewünschte Bewegungsmuster zu erhalten. Die erste Kurve K1 stellt dabei die Ansteuerung des einen Ablenkspiegels und die zweite Kurve K2 die Ansteuerung des jeweils anderen Ablenkspiegels abhängig von der Zeit t dar. Wie in Figur 11 ersichtlich wird dabei die Position der Ablenkspiegel sowohl in X-Richtung als auch in Y-Richtung schrittweise bzw. stufenweise geändert. Dabei treten hohe Beschleunigungen und Beschleunigungsänderungen auf. Die Stellmotoren 27 für die Ablenkspiegel werden dabei stark belastet.

Im Unterschied dazu ist erfindungsgemäß eine Spiralbahn 19 für die Bewegung der Auftreffstelle 18 des Laserstrahls 12 auf der Werkstückoberfläche 17 vorgesehen. Die Spiralbahn 19 kann durch sinus- und kosinusförmige Auslenkungsbewegungen der beiden Ablenkspiegel 23, 24 erreicht werden, wie dies anhand der dritten Kurve K3 und der vierten Kurve K4 schematisch veranschaulicht ist. Die beiden Kurven K3, K4 sind zueinander phasenverschoben. Beispielsgemäß ist die vierte Kurve K4 für die Ansteuerung der Stellmotors 27 für den ersten Ablenkspiegel 23 cosinusförmig, während die dritte Kurve K3 zur Ansteuerung der Stellmotors 27 für den zweiten Ablenkspiegel 24 sinusförmig ist. Die Beschleunigungsänderungen sind hierbei reduziert, so dass ein ruck- und vibrationsarmer Betrieb der Ablenkeinrichtung 15 ermöglicht ist.

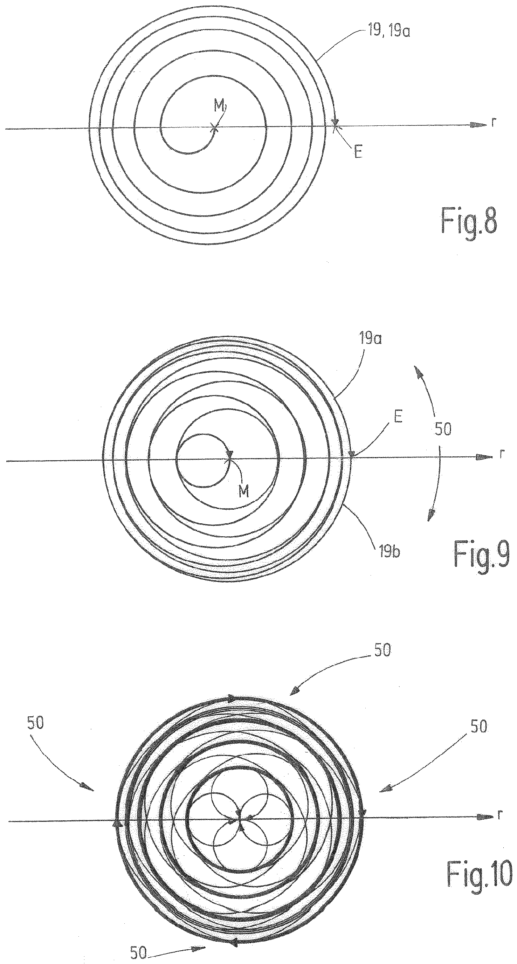

Eine weitere Verbesserung des Betriebs der Ablenkeinrichtung 50 lässt sich erreichen, wenn innerhalb der Schraffurfläche 16 mehrere Spiralbahnen 9 vorgesehen werden, was anhand der Figuren 8 bis 10 nachfolgend erläutert wird.

In Figur 8 ist eine Spiralbahn 19 veranschaulicht, die nach dem vorstehend beschriebenem Prinzip ermittelt wurde. Diese Spiralbahn 19 dient nachfolgend als erste Spiralbahn 19a. Bei dem Ausführungsbeispiel gemäß Figur 9 ist die erste Spiralbahn 19a und eine weitere, zweite Spiralbahn 19b vorgegeben, die innerhalb der Schraffurfläche den Weg für die Auftreffstelle 18 des Lasers vorgeben. Die beiden Spiralbahnen 19a und 19b weisen dieselben Spiralbahnparameter n, R, a auf. Beispielsgemäß wurde die zweite Spiralbahn 19b durch Spiegelung der ersten Spiralbahn 19a an der Achse erzeugt, auf der die Übergangspunkte U zwischen den Halbkreissegmenten 45, 46 der ersten Spiralbahn 19a liegen. Im vorliegenden Fall erfolgte die Spiegelung an der r-Achse.

Bei dem Ausführungsbeispiel der Schraffurfläche 16 mit einer ersten Spiralbahn 19a und einer zweiten Spiralbahn 19b gemäß Figur 9 kann somit die Auftreffstelle 18 des Laserstrahls ausgehend vom Mittelpunkt M bis zum Endpunkt E der ersten Spiralbahn 19a und von dort ohne Richtungsumkehr anhand der zweiten Spiralbahn 19b zurück zum Mittelpunkt M geführt werden. Von dort wird die Auftreffstelle 18 dann erneut entlang die erste Spiralbahn 19a nach außen zum Bahnendpunkt E geführt usw. Dadurch kann ein ruckfreier Bewegungsablauf für die Stellbewegung der Ablenkspiegel 23, 24 durch die Stellmotoren 27 erreicht werden.

Die erste Spiralbahn 19a und die zweite Spiralbahn 19b gemäß Figur 9 bilden ein Spiralbahnpaar 50. Wie in Figur 9 zu erkennen ist, existieren bei dieser Laserstrahlführung Stellen innerhalb der Schraffurfläche 16 mit stärkerem und Stellen mit weniger starkem Materialabtrag. Beispielsweise ist in Figur 9 rechts vom Mittelpunkt M ein Bereich zu erkennen, der fei ist von Auftreffstellen 18. Um eine Homogenisierung des Materialabtrags innerhalb der Schraffurfläche 16 zu erreichen, kann die Führung des Laserstrahls auch entlang einer Vielzahl von Spiralbahnen 19 bzw. mehreren Spiralbahnen 50 erfolgen. Ein Ausführungsbeispiel hierfür ist in Figur 10 veranschaulicht. Dort ist das Spiralbahnpaar 50 gemäß Figur 9 mehrmals und beispielsgemäß viermal innerhalb der Schraffurfläche 16 angeordnet. Die vier Spiralbahnpaare 50 sind in Umfangsrichtung um die Schraffurfläche 16 bzw. den Mittelpunkt M um jeweils 90° gegeneinander um den Mittelpunkt M gedreht. Die Spiralbahnpaare 50 sind sozusagen in Umfangsrichtung regelmäßig verteilt angeordnet. Der Drehwinkel zwischen zwei benachbarten Spiralbahnpaaren 50 ergibt sich aus der Anzahl der vorgesehenen Spiralbahnpaare 50. In Abwandlung zum Ausführungsbeispiel nach Figur 10 kann auch eine ungerade Anzahl von Spiralbahnpaaren verwendet werden. Die Anzahl der zur Führung des Laserstrahls innerhalb der Schraffurfläche 16 vorgebenen Spiralbahnen 19 bzw. Spiralbahnpaaren 50 ist grundsätzlich beliebig wählbar. Es können beispielsweise auch sechs oder zwölf gegeneinander gedrehte Spiralbahnpaare 50 vorgesehen sein.

In der Steuereinheit 14 können Bearbeitungsprogramme für bestimmte wiederkehrende Bearbeitungsaufgaben abgespeichert und von einer Bedienperson über eine nicht dargestellte Bedienerschnittstelle der Laserbearbeitungsvorrichtung 10 auswählbar sein. Beispielsweise können in einem Bearbeitungsprogramm Werkstückmaterialien, gewünschte Formen des Abtragsprofils 40, Schneidkantenradien, Oberflächenrauheiten oder dergleichen ausgewählt werden. Der Linienabstand a und gegebenenfalls weiterer Spiralbahnparameter n, R werden dann abhängig vom ausgewählten Bearbeitungsprogramm durch die Steuereinheit 14 eingestellt. Diese Spiralbahnparameter a, n, R sind dem auswählbaren Bearbeitungsprogramm zugeordnet, beispielsweise durch eine Tabelle oder einer anderen vergleichbaren Zuordnungsvorschrift. Die für eine Bearbeitungsaufgabe vorgesehenen Bearbeitungsprogramme und die dafür notwendigen Spiralbahnparameter können empirisch ermittelt und dann abgespeichert werden.

Die Erfindung betrifft eine Verfahren und eine Laserbearbeitungsvorrichtung 10 zur Bearbeitung eines Werkstücks 13. Die Laserbearbeitungsvorrichtung 10 weist einen Laser 11 zur Erzeugung eines Laserstrahls 12 auf, der über eine Ablenkeinrichtung 15 nach einem durch eine Steuereinheit 14 vorgegebenen Muster abgelenkt und auf eine zu bearbeitende Werkstückoberfläche 17 eines Werkstücks 13 gerichtet wird. Die Auftreffstelle 18 des abgelenkten Laserstrahls 12b auf der Werkstückoberfläche 17 wird innerhalb einer kreisrunden Schraffurfläche 16 entlang wenigstens einer Spiralbahn 19 geführt. Die Spiralbahn 19 ist durch Spiralbahnparameter charakterisiert. Ein Spiralbahnparameter ist der Linienabstand a zwischen benachbarten Schnittpunkten P der Spiralbahn 19 mit einer durch den Mittelpunkt M der Spiralbahn 19 verlaufenden Achse. Der Linienabstand a ist variabel einstellbar oder aus vorgegebenen Werten auswählbar. Durch die Veränderung des Linienabstandes a zwischen zwei in Radialrichtung bezüglich des Mittelpunkts M nebeneinander liegenden Spiralbahnstellen kann die Energieverteilung der durch den Laserstrahl innerhalb der Schraffurfläche 16 in das Werkstück 13 eingetragenen Energie innerhalb der Schraffurfläche 16 eingestellt werden. Hierfür dient ein Abstandsparameter c einer vorgegebenen bzw. vorgebbaren Abstandsfunktion f, über die der Linienabstand a bestimmt werden kann. Dadurch lassen sich gewünschte Zielparameter am bearbeiteten Werkstück 13 beeinflussen.

Bezugszeichenliste:

| | |
|---|---|
| 10 | Laserbearbeitungsvorrichtung |
| 11 | Laser |
| 12 | Laserstahl |
| 12a | einfallender Laserstrahl |
| 12b | abgelenkter Laserstrahl |
| 13 | Werkstück |

| 14 | Steuereinheit |
|---|---|
| 15 | Ablenkeinrichtung |
| 16 | Schraffurfläche |
| 17 | Werkstückoberfläche |
| 18 | Auftreffstelle |
| 19 | Spiralbahn |
| 19a | erste Spiralbahn |
| 19b | zweite Spiralbahn |
| 23 | erster Ablenkspiegel |
| 24 | zweiter Ablenkspiegel |
| 25 | erste Spiegelschwenkachse |
| 26 | zweite Spiegelschwenkachse |
| 27 | Stellmotor |
| 29 | Fokussiereinheit |
| 30 | Positionieranordnung |
| 31 | Werkstückhalter |
| 32 | erster Schwenkantrieb |
| 33 | erste Schwenkachse |
| 34 | zweiter Schwenkantrieb |
| 35 | zweite Schwenkachse |
| 40 | Abtragsprofil |
| 41 | Flanke |
| 42 | Grund |
| 45 | erstes Halbkreissegment |
| 46 | zweites Halbkreissegment |
| 50 | Spiralbahnpaar |
| a | Linienabstand |
| AS | Ablenksignal |
| b | Skalierungsfaktor |
| c | Abstandsparameter |
| B | Breite des Abtragsprofils |
| d | Abschnitt |
| D | Durchmesser der Spiralbahn |
| E | Endpunkt |
| f | Abstandsfunktion |
| K | Kurven zur Ansteuerung der Stellmotoren |
| LS | Lasersignal |
| LX, LY, LZ | Linearantrieb |
| M | Mittelpunkt |
| n | Anzahl der Spiralumläufe |
| P | Schnittpunkt |
| PS | Positioniersignal |
| r | Funktionsvariable |
| R | Radius |
| t | Zeit |
| U | Übergangspunkt |
| X,Y,Z | Raumrichtung |

**Patentansprüche**

1. Verfahren zur Bearbeitung eines Werkstücks (13) unter Verwendung einer Laserbearbeitungsvorrichtung (10), wobei das Abtragsprofil dem Querschnittsprofil einer herstellbaren Nut entspricht, **gekennzeichnet durch** folgende Merkmale und Schritte : einen Laser (11) zur Erzeugung eines Laserstahls (12), unter Verwendung einer im Lichtweg des Laserstrahls (12) angeordneten, ansteuerbaren Ablenkeinrichtung (15), die den von dem Laser (11) einfallenden Laserstrahl (12a) während der Werkstückbearbeitung in wenigstens zwei Raumrichtungen (X, Y) ablenkt und den abgelenkten Laserstrahl (12b) auf das Werkstück (13) richtet, sowie unter Verwendung einer Positionieranordnung (30) zur Positionierung und/oder Bewegung des Werkstücks (13) und der Ablenkeinrichtung (15) relativ zueinander, wobei die Ablenkeinrichtung (15) die Auftreffstelle (18) des abgelenkten Laserstrahls (12b) innerhalb einer Schraffurfläche (16) auf der Werkstückoberfläche (17) entlang wenigstens einer Spiralbahn (19) bewegt, und wobei die Positionieranordnung (30) während der Bearbeitung das Werkstück (13) und die Ablenkeinrichtung (15) relativ zueinander bewegt, wobei als ein die wenigstens eine Spiralbahn (19) beschreibender Spiralbahnparameter (a, n, R) der Linienabstand (a) zwischen zwei benachbarten Schnittpunkten (P) der Spiralbahn (19) mit einer **durch** den Mittelpunkt (M) der Spiralbahn (19) verlaufenden Achse (r) eingestellt oder aus vorgegebenen Daten ausgewählt wird, um ein Abtragsprofil und einen Materialabtrag innerhalb der Schraffurfläche (16) zu beeinflussen, und wobei der Linienabstand (a) vom Mittelpunkt (M) der wenigstens einen Spiralbahn (19) gesehen nach außen wahlweise zunehmend oder abnehmend einstellbar oder auswählbar ist.

2. Verfahren nach Anspruch 1, **dadurch gekennzeichnet, dass** als ein weiterer, die wenigstens eine Spiralbahn (19) beschreibender Spiralbahnparameter (a, n, D) der Radius (R) der Spiralbahn (19) zur Beeinflussung des Materialabtrags eingestellt oder aus vorgegebenen Daten ausgewählt wird.

3. Verfahren nach Anspruch 1 oder 2, **dadurch gekennzeichnet, dass** als ein weiterer, die wenigstens eine Spiralbahn (19) beschreibender Spiralbahnparameter (a, n, R) die Anzahl (n) der Spiralumläufe der Spiralbahn (19) innerhalb der Schraffurfläche (16) eingestellt oder aus vorgegebenen Daten ausgewählt wird, um den Materialabtrag innerhalb der Schraffurfläche (16) zu beeinflussen.

4. Verfahren nach einem der vorhergehenden Ansprüche, **dadurch gekennzeichnet, dass** der Linienabstand (a) von einer vorgegebenen Abstandsfunktion (f) abhängt, die wenigstens einen veränderbaren Abstandsparameter (c) aufweist.

**5.** Verfahren nach Anspruch 4,
**dadurch gekennzeichnet, dass** der Abstandsparameter (c) im Exponenten der Funktionsvariablen (r) steht.

**6.** Verfahren nach einem der vorhergehenden Ansprüche,
**dadurch gekennzeichnet, dass** innerhalb der Schraffurfläche (16) zumindest eine erste Spiralbahn (19a) vorgegeben ist, die vom Mittelpunkt (M) der ersten Spiralbahn (19a) nach außen zu einem Bahnendpunkt (E) verläuft und dass wenigstens eine vom Bahnendpunkt (E) der ersten Spiralbahn (19a) zurück zum Mittelpunkt (M) der ersten Spiralbahn (19a) verlaufende, von der ersten Spiralbahn (19a) verschiedene zweite (19b) Spiralbahn vorgegeben ist.

**7.** Verfahren nach Anspruch 6,
**dadurch gekennzeichnet, dass** die zweite Spiralbahn (19b) dieselben Spiralbahnparameter (a, n, R) aufweist wie die erste Spiralbahn (19a).

**8.** Verfahren nach einem der vorhergehenden Ansprüche,
**dadurch gekennzeichnet, dass** die wenigstens eine Spiralbahn (19) aus mehreren Halbkreissegmenten (45, 46) mit unterschiedlichen Radien zusammengesetzt ist.

**9.** Verfahren nach einem der vorhergehenden Ansprüche,
**dadurch gekennzeichnet, dass** eine Bewegung der Schraffurfläche (16) mit der wenigstens einen Spiralbahn (19) entlang der Werkstückoberfläche (17) einen Materialabtrag mit einem Abtragsprofil (40) erzeugt, das abhängig ist vom Linienabstand (a) der Spiralbahn (19).

**10.** Verfahren nach einem der vorhergehenden Ansprüche,
**dadurch gekennzeichnet, dass** eine Bewegung der Schraffurfläche (16) mit der wenigstens einen Spiralbahn (19) entlang der Werkstückoberfläche einen Materialabtrag mit einem Abtragsprofil (40) erzeugt, wobei die Oberflächenrauheit an einer Flanke (41) des Abtragsprofils (40) abhängig ist vom Linienabstand (a) der Spiralbahn (19) im radial äußeren Randbereich der Schraffurfläche (16).

**11.** Verfahren nach einem der vorhergehenden Ansprüche,
**dadurch gekennzeichnet, dass** eine Bewegung der Schraffurfläche (16) mit der wenigstens einen Spiralbahn (19) entlang der Werkstückoberfläche einen Materialabtrag mit einem Abtragsprofil (40) erzeugt, wobei die Flankensteilheit des Abtragsprofils (40) abhängig ist vom Linienabstand (a) der Spiralbahn (19) im radial äußeren Randbereich der Schraffurfläche (16).

**12.** Verfahren nach einem der vorhergehenden Ansprüche,
**dadurch gekennzeichnet, dass** mehrere auswählbare Bearbeitungsprogramme abgespeichert sind, wobei jedem Bearbeitungsprogramm zumindest der Linienabstand (a) oder zusätzliche weitere Spiralbahnparameter (n, R) zugeordnet sind.

**13.** Verfahren nach einem der Ansprüche 9 bis 11 und nach Anspruch 13,
**dadurch gekennzeichnet, dass** unterschiedliche auswählbare Bearbeitungsprogramme für unterschiedliche Abtragsprofile (40) am Werkstück (13) zur Verfügung stehen.

**14.** Laserbearbeitungsvorrichtung (10) zur Bearbeitung eines Werkstücks (13),
mit einem Laser (11) zur Erzeugung eines Laserstahls (12)
mit einer Steuereinheit (14),
**gekennzeichnet durch** eine im Lichtweg des Laserstrahls (12) angeordnete, von einer Steuereinheit (14) ansteuerbare Ablenkeinrichtung (15), die den von dem Laser (11) einfallenden Laserstrahl (12a) während der Werkstückbearbeitung in wenigstens zwei Raumrichtungen (X, Y) ablenkt und den abgelenkten Laserstrahl (12b) auf das Werkstück (13) richtet,
wobei die Steuereinheit (14) die Ablenkeinrichtung (15) derart ansteuert, dass sich die Auftreffstelle (18) des abgelenkten Laserstrahls (12b) innerhalb einer Schraffurfläche (16) auf der Werkstückoberfläche (17) entlang wenigstens einer Spiralbahn (19) bewegt, und **durch** eine Positionieranordnung (30), die dazu eingerichtet ist, das Werkstück (13) und der Ablenkeinrichtung (15) während der Bearbeitung relativ zueinander zu bewegen, wodurch ein Abtragsprofil entsteht, das dem Querschnittsprofil einer Nut entspricht, wobei mittels der Steuereinheit (14) als ein die wenigstens eine Spiralbahn (19) beschreibender Spiralbahnparameter (a, n, R) der Linienabstand (a) zwischen zwei benachbarten Schnittpunkten (P) der Spiralbahn (19) mit einer **durch** den Mittelpunkt (M) der Spiralbahn (19) verlaufenden Achse (r) eingestellt oder aus vorgegebenen Daten ausgewählt wird, um das Abtragsprofil und den Materialabtrag innerhalb der Schraffurfläche (16) zu beeinflussen, wobei der Linienabstand (a) vom Mittelpunkt (M) der wenigstens einen Spiralbahn (19) gesehen nach außen wahlweise zunehmend oder abnehmend einstellbar oder auswählbar ist.

**Claims**

1. Method for machining a workpiece (13) using a laser machining device (10), wherein the material removal profile corresponds to the cross-section profile of a producible groove, **characterized by** the following features and steps:

   a laser (11) to generate a laser beam (12), use of a controllable deflector device (15) which is arranged in the light path of the laser beam (12) and deflects the incident laser beam (12a) from the laser (11) during workpiece machining substantially in two spatial directions (X, Y) and directs the deflected laser beam (12b) onto the workpiece, and
   use of a positioning arrangement (30) for positioning and/or moving the workpiece (13) and the deflector device (15) relative to each other, wherein the deflector device (15) moves the contact point (18) of the deflected laser beam (12b) along at least one spiral path (19) within a hatched area (16) on the workpiece surface (16), and
   wherein the positioning arrangement (30) moves the workpiece (13) and the deflection device (15) relative to each other during the machining,
   wherein a spiral path parameter (a, n, R) describing the at least one spiral path (19) sets the line spacing (a) between two adjacent intersections (P) of the spiral path (19) with an axis (r) running through the centre point (M) of the spiral path (19) or selects this from predefined data, in order to influence a material removal profile and a material removal within the hatched area (16),
   and wherein the line spacing (a) can be set or selected either increasing or decreasing towards the outside, viewed from the centre point (M) of the at least one spiral path (19).

2. Method according to claim 1, **characterized in that** as a further spiral parameter (a, n,D) describing the at least one spiral path (19), the radius (R) of the spiral path (19) is set or is selected from the predefined data for influencing the material removal.

3. Method according to claim 1 or 2, **characterized in that** as a further spiral parameter (a, n, R) describing the at least one spiral path (19), the number (n) of spiral loops of the spiral path (19) within the hatched area (16) is set or is selected from the predefined data, in order to influence the material removal within the hatched area (16).

4. Method according to any of the preceding claims, **characterized in that** the line spacing (a) depends on a predefined spacing function (f) which has at least one variable spacing parameter (c).

5. Method according to claim 4, **characterized in that** the spacing parameter (c) stands in the exponent of the function variables (r).

6. Method according to any of the preceding claims, **characterized in that** within the hatched area (16), at least one first spiral path (19a) is predefined which runs from the centre point (M) of the first spiral path (19a) outward to a path end point (E), and that at least one second spiral path (19b) is provided running from the path end point (E) of the first spiral path (19a) back to the centre point (M) of the first spiral path (19a), and different from the first spiral path (19a).

7. Method according to claim 6, **characterized in that** the second spiral path (19b) has the same spiral path parameters (a, n, R) as the first spiral path (19a).

8. Method according to any of the preceding claims, **characterized in that** the at least one spiral path (19) is composed of several segments (45, 46) of semicircles with different radii.

9. Method according to any of the preceding claims, **characterized in that** a movement of the hatched area (16) with the at least one spiral path (19) along the workpiece surface (17) produces a material removal with a material removal profile (40) which is dependent on the line spacing (a) of the spiral path (19).

10. Method according to any of the preceding claims, **characterized in that** a movement of the hatched area (16) with the at least one spiral path (19) along the workpiece surface produces a material removal with a material removal profile (40), wherein the surface roughness on a flank (41) of the material removal profile (40) is dependent on the line spacing (a) of the spiral path (19) in the radially outer edge region of the hatched area (16).

11. Method according to any of the preceding claims, **characterized in that** a movement of the hatched area (16) with the at least one spiral path (19) along the workpiece surface produces a material removal with a material removal profile (40), wherein the flank steepness of the material removal profile (40) is dependent on the line spacing (a) of the spiral path (19) in the radially outer edge region of the hatched area (16).

12. Method according to any of the preceding claims, **characterized in that** several selectable machining programs are stored, wherein at least the line spacing (a) or additional further spiral path parameters (n, R) are assigned to each machining program.

13. Method according to any of claims 9 to 11 and according to claim 13, **characterized in that** different selectable machining programs are available for different material removal profiles (40) on the workpiece (13).

14. Laser machining device (10) for machining a workpiece (13),
with a laser (11) for producing a laser beam (12),
with a control unit (14),
**characterized by** a deflector device (15) which is arranged in the light path of the laser beam (12) and can be controlled by a control unit (14), and deflects the incident light beam (12a) from the laser (11) during workpiece machining in at least two spatial directions (X, Y) and directs the deflected laser beam (12b) onto the workpiece (13), wherein the control unit (14) controls the deflector device (15) such that the contact point (18) of the deflected laser beam (12b) moves along at least one spiral path (19) within a hatched area (16) on the workpiece surface (16), and by a positioning arrangement (30) which is configured to move the workpiece (13) and the deflector device (15) relative to each other during the machining, resulting in a material removal profile which corresponds to the cross-section profile of a groove, wherein by means of the control unit (14), as a spiral path parameter (a, n, R) describing the at least one spiral path (19), the line spacing (a) between two adjacent intersections (P) of the spiral path (19) with an axis (r) running through the centre point (M) of the spiral path (19) is set or selected from predefined data, in order to influence the material removal profile and the material removal within the hatched area (16), wherein the line spacing (a) can be set or selected either increasing or decreasing towards the outside, viewed from the centre point (M) of the at least one spiral path (19).

**Revendications**

1. Procédé d'usinage d'une pièce (13) en utilisant un dispositif d'usinage au laser (10), où le profil d'enlèvement de matière correspond au profil de section droite d'une rainure pouvant être réalisée, **caractérisé par** les propriétés et étapes suivantes :

un laser (11) destiné à produire un faisceau laser (12), avec utilisation d'un dispositif de déviation (15), susceptible d'être activé qui est placé sur le chemin optique du faisceau laser (12) et qui dévie le faisceau laser (12a), incident depuis le laser (11), dans au moins deux directions dans l'espace (X, Y) pendant l'usinage de la pièce et oriente le faisceau laser dévié (12b) sur la pièce (13), et avec utilisation d'un dispositif de positionnement (30) pour le positionnement et/ou le déplacement de la pièce (13) et du dispositif de déviation (15) l'un par rapport à l'autre, le dispositif de déviation (15) déplaçant le point d'incidence (18) du faisceau laser dévié (12b) à l'intérieur d'une surface hachurée (16) sur la surface de pièce (17), le long d'au moins une trajectoire en spirale (19), et le dispositif de positionnement (30) déplaçant la pièce (13) et le dispositif de déviation (15) l'un par rapport à l'autre pendant l'usinage, sachant que l'on règle, en tant que paramètre de trajectoire en spirale (a, n, R) décrivant la trajectoire en spirale (19), au nombre d'au moins une, l'écartement linéaire (a) entre deux points d'intersection (P) voisins de la trajectoire en spirale (19) avec un axe (r) passant par le centre (M) de la trajectoire en spirale (19), ou on le sélectionne parmi des données prédéterminées, afin d'agir sur un profil d'enlèvement et un enlèvement de matière à l'intérieur de la surface hachurée (16), et sachant que l'écartement linéaire (a) vers l'extérieur, vu depuis le centre (M) de la trajectoire en spirale (19), au nombre d'au moins une, peut être réglé au choix de façon croissante ou décroissante ou peut être sélectionné.

2. Procédé selon la revendication 1, **caractérisé en ce que** l'on règle, en tant que paramètre de trajectoire en spirale (a, n, D) supplémentaire décrivant la trajectoire en spirale (19), au nombre d'au moins une, le rayon (R) de la trajectoire en spirale (19), ou on le sélectionne parmi des données prédéterminées, afin d'agir sur l'enlèvement de matière.

3. Procédé selon la revendication 1 ou 2, **caractérisé en ce que** l'on règle, en tant que paramètre de trajectoire en spirale (a, n, R) supplémentaire décrivant la trajectoire en spirale (19), au nombre d'au moins une, le nombre (n) de spires de la trajectoire en spirale (19) à l'intérieur de la surface hachurée (16), ou on le sélectionne parmi des données prédéterminées, afin d'agir sur l'enlèvement de matière à l'intérieur de la surface hachurée (16).

4. Procédé selon l'une des revendications précédentes, **caractérisé en ce que** l'écartement linéaire (a) dépend d'une fonction d'écartement (f) prédéterminée, qui présente au moins un paramètre d'écartement (c) modifiable.

5. Procédé selon la revendication 4, **caractérisé en ce que** le paramètre d'écartement (C) est noté dans l'exposant de la variable de fonction (r).

**6.** Procédé selon l'une des revendications précédentes, **caractérisé en ce que**, à l'intérieur de la surface hachurée (16), est prédéterminée au moins une première trajectoire en spirale (19a) qui s'étend depuis le centre (M) de la première trajectoire en spirale (19a) vers l'extérieur, jusqu'à un point d'extrémité de trajectoire (E), et **en ce qu'**il est prédéterminé au moins une deuxième trajectoire en spirale (19b) qui s'étend depuis le point d'extrémité de trajectoire (E) de la première trajectoire en spirale (19a) et revient au centre (M) de la première trajectoire en spirale (19a) et qui est différente de la première trajectoire en spirale (19a).

**7.** Procédé selon la revendication 6, **caractérisé en ce que** la deuxième trajectoire en spirale (19b) présente les mêmes paramètres de spirale (a, n, R) que la première trajectoire en spirale (19a).

**8.** Procédé selon l'une des revendications précédentes, **caractérisé en ce que** la trajectoire en spirale (19), au nombre d'au moins une, se compose de plusieurs segments en demi-cercle (45, 46) de rayons différents.

**9.** Procédé selon l'une des revendications précédentes, **caractérisé en ce qu'**un mouvement de la surface hachurée (16) avec la trajectoire en spirale (19), au nombre d'au moins une, le long de la surface de pièce (17), produit un enlèvement de matière avec un profil d'enlèvement (40) qui est fonction de l'écartement linéaire (a) de la trajectoire en spirale (19).

**10.** Procédé selon l'une des revendications précédentes, **caractérisé en ce qu'**un mouvement de la surface hachurée (16) avec la trajectoire en spirale (19), au nombre d'au moins une, le long de la surface de pièce, produit un enlèvement de matière avec un profil d'enlèvement (40), où la rugosité de surface sur un flanc (41) du profil d'enlèvement (40) est fonction de l'écartement linéaire (a) de la trajectoire en spirale (19) dans la zone de bord radialement extérieure de la surface hachurée (16).

**11.** Procédé selon l'une des revendications précédentes, **caractérisé en ce qu'**un mouvement de la surface hachurée (16) avec la trajectoire en spirale (19), au nombre d'au moins une, le long de la surface de pièce, produit un enlèvement de matière avec un profil d'enlèvement (40), où la pente de flanc du profil d'enlèvement (40) est fonction de l'écartement linéaire (a) de la trajectoire en spirale (19) dans la zone de bord radialement extérieure de la surface hachurée (16).

**12.** Procédé selon l'une des revendications précédentes, **caractérisé en ce que** plusieurs programmes d'usinage sélectionnables sont enregistrés, où au moins l'écartement linéaire (a) ou d'autres paramètres de spirale (n, R) supplémentaires sont associés à chaque programme d'usinage.

**13.** Procédé selon l'une des revendications 9 à 11 et selon la revendication 13, **caractérisé en ce que** différents programmes d'usinage sélectionnables sont disponibles pour différents profils d'enlèvement (40) sur la pièce (13).

**14.** Dispositif d'usinage au laser (10) destiné à l'usinage d'une pièce (13),
comprenant un laser (11) destiné à produire un faisceau laser (12),
comprenant une unité de commande (14),

      **caractérisé en ce qu'**il comporte

un dispositif de déviation (15), susceptible d'être activé par une unité de commande (14), qui est placé sur le chemin optique du faisceau laser (12) et qui dévie le faisceau laser (12a), incident depuis le laser (11), dans au moins deux directions dans l'espace (X, Y) pendant l'usinage de la pièce et oriente le faisceau laser dévié (12b) sur la pièce (13), l'unité de commande (14) activant le dispositif de déviation (15) de manière à ce que le point d'incidence (18) du faisceau laser dévié (12b) se déplace à l'intérieur d'une surface hachurée (16) sur la surface de pièce (17), le long d'au moins une trajectoire en spirale (19).

      et **en ce qu'**il comporte

un dispositif de positionnement (30) qui est conçu pour déplacer la pièce (13) et le dispositif de déviation (15) l'un par rapport à l'autre pendant l'usinage, créant ainsi un profil d'enlèvement qui correspond au profil de section droite d'une rainure, sachant que l'on règle, au moyen de l'unité de commande (14), en tant que paramètre de trajectoire en spirale (a, n, R) décrivant la trajectoire en spirale (19), au nombre d'au moins une, l'écartement linéaire (a) entre deux points d'intersection (P) voisins de la trajectoire en spirale (19) avec un axe (r) passant par le centre (M) de la trajectoire en spirale (19), ou on le sélectionne parmi des données prédéterminées, afin d'agir sur le profil d'enlèvement et l'enlèvement de matière à l'intérieur de la surface hachurée (16), sachant que l'écartement linéaire (a) vers l'extérieur, vu depuis le centre (M) de la trajectoire en spirale (19), au nombre d'au moins une, peut être réglé au choix de façon croissante ou décroissante ou peut être sélectionné.

Fig.1

Fig.2

$$d = \frac{f(R)}{n}$$

Fig.3

Fig.4

Fig.5

Fig.6

Fig.7

Fig.8

Fig.9

Fig.10

Fig.11

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120080414 A1
- DE 102009044316 A1